# EUROPÄISCHE PATENTANMELDUNG

(11) **EP 4 813 475 A1**
(43) Veröffentlichungstag der Anmeldung: **30.09.2026**
(21) Anmeldenummer: 26168059.9
(22) Anmeldetag: 26.03.2026
(51) Int. Cl.: A62C 35/20, A62C 37/50, E03B 9/02, G01F 15/06

(54) **VERFAHREN UND VORRICHTUNG ZUM PRÜFEN EINES HYDRANTEN**

(30) Priorität: 28.03.2025 AT 482025
(71) Anmelder: Hawle Service GmbH, 2544 Leobersdorf (AT)
(72) Erfinder: Venhoda, Thomas, 2544 Leobersdorf (AT)
(74) Vertreter: Maier, Martin

(57) **Zusammenfassung**

Offenbart ist ein Verfahren zum Prüfen eines an eine Wasserversorgung angeschlossenen Hydranten (200), aufweisend:
(i) Messtechnisches Erfassen von wenigstens zwei der folgenden Parameter: Zeitverlauf eines Wasserausflusses aus dem Hydranten (200) und durch eine elektronische Prüfvorrichtung (100), eines Zeitverlauf eines Drucks des aus dem Hydranten (200) ausfließenden und durch die elektronische Prüfvorrichtung (100) durchfließenden Wassers, Öffnungsgrad einer Armatur (40) zur Steuerung des Wasserdurchflusses;
(ii) Definiertes Abbrechen des messtechnischen Erfassens der unter (i) erfassten Parameter in Abhängigkeit von einem definierten Zielwert eines der wenigstens zwei messtechnisch erfassten Parameter;
(iii) Übermitteln der wenigstens zwei messtechnisch erfassten Parameter an ein Prognosemodul (32); und
(iv) Prognostizieren von zumindest einem Zeitverlauf des durchfließenden Wassers ab dem definierten Abbrechen des messtechnischen Erfassens der wenigstens zwei Parameter mittels des Prognosemoduls (32), basierend auf den bis zum definierten Abbrechen wenigstens zwei messtechnisch erfassten Parametern.

## Beschreibung

Die Erfindung betrifft ein Verfahren zum Prüfen eines Hydranten. Die Erfindung betrifft weiterhin eine elektronische Prüfvorrichtung zum Prüfen eines Hydranten. Die Erfindung betrifft weiterhin ein Computerprogrammprodukt zum Ausführen des vorgeschlagenen Verfahrens.

Vorrichtungen zum Durchführen von Wasserdurchflußmessungen sich sind bekannt. Zum Beispiel ist aus DE 295 13 678 U1 ein tragbares Wasserdurchfluß-Meßgerät bekannt.

Aus DE 196 01 609 A1 ist ein tragbares batteriebetriebenes Wasserdurchfluß-Meßgerät mit digitaler Anzeige bekannt.

Aus EP 2 098 836 A2 ist eine Anordnung zum Prüfen von Hydranten bekannt, bei der mit Hilfe von Messgeräten wenigstens der Ruhedruck (Druck im Wasser ohne Entnahme von Wasser aus dem Hydranten) und die Leistungsfähigkeit des Hydranten (maximal abgebbare Wassermenge je Zeiteinheit) erfasst wird. Hierzu sind Messgeräte vorgesehen, die in einer in Strömungsrichtung schräg ansteigenden Rohrleitung aus starren Rohren vorgesehen sind, wobei einströmseitig mit Abstand vor dem Mengenzähler ein Drucksensor und in Strömungsrichtung gesehen nach dem Zähler im starren Rohr ein Ventil für die Druckregulierung vorgesehen sind. Durch die starren Rohrleitungen vor und nach dem Zähler ergeben sich Beruhigungsstrecken, so dass reproduzierbare Werte für die Parameter des Hydranten erfasst werden können.

Aus US 8 805 633 B1 ist ein Flussmesssystem für Fluidnetze bekannt.

Aus AU 2019268064 A1 ist eine Feuerhydranten-Testvorrichtung bekannt.

Nachteilig können die mittels konventioneller Vorrichtungen durchgeführten Prüf- und Messverfahren mit hohem Ressourcenaufwand verbunden sein.

Es ist daher eine Aufgabe der Erfindung, ein verbessertes Verfahren zum Prüfen eines Hydranten bereit zu stellen.

Gemäß einem ersten Aspekt wird die Aufgabe gelöst mit einem Verfahren zum Prüfen eines an eine Wasserversorgung angeschlossenen Hydranten, aufweisend:
(i) Messtechnisches Erfassen von wenigstens zwei der folgenden Parameter: Zeitverlauf eines Wasserausflusses aus dem Hydranten und durch eine elektronische Prüfvorrichtung, eines Zeitverlauf eines Drucks des aus dem Hydranten ausfließenden und durch die elektronische Prüfvorrichtung durchfließenden Wassers, Öffnungsgrad einer Armatur zur Steuerung des Wasserdurchflusses;
(ii) Definiertes Abbrechen des messtechnischen Erfassens der unter (i) erfassten Parameter in Abhängigkeit von einem definierten Zielwert eines der wenigstens zwei messtechnisch erfassten Parameter;
(iii) Übermitteln der wenigstens zwei messtechnisch erfassten Parameter an ein Prognosemodul; und
(iv) Prognostizieren von zumindest einem Zeitverlauf des durchfließenden Wassers ab dem definierten Abbrechen des messtechnischen Erfassens der wenigstens zwei Parameter mittels des Prognosemoduls, basierend auf den bis zum definierten Abbrechen wenigstens zwei messtechnisch erfassten Parametern.

Vorteilhaft ist auf diese Weise eine ressourcenschonende Prüfung des Hydranten unterstützt, was vorteilhaft in weniger Wasserverbrauch resultieren kann, wobei ein Versorgungsnetz weniger stark belastet wird und eine Dienstleistung verbessert sein können. Weiterhin ist das vorgeschlagene Verfahren schnell ausführbar. Die Leistungsfähigkeit des Hydranten lässt sich als eine verfügbare Löschwasserrate darstellen, die eine wichtige Information für Kommunen darstellt. Vorteilhaft können aufgrund der verkürzten Prüfzeit eine erhöhte Anzahl von Hydranten geprüft werden, was einen Prüfdurchsatz erhöht, wodurch eine Prüfeffizienz bedeutsam optimiert sein kann.

Gemäß einem zweiten Aspekt wird die Aufgabe gelöst mit einer elektronischen Prüfvorrichtung zum Prüfen eines Hydranten, aufweisend:
- ein erstes Anschlusselement zum Anschließen an den Hydranten;
- eine elektronische Ermittlungseinrichtung zum messtechnischen Erfassen von wenigstens zwei der folgenden Parameter: Zeitverlauf eines Wasserausflusses aus dem Hydranten und durch die elektronische Prüfvorrichtung, Zeitverlauf eines Drucks des aus dem Hydranten ausfließenden und durch die elektronische Prüfvorrichtung durchfließenden Wassers, Öffnungsgrad einer Armatur zur Steuerung des Wasserdurchflusses bis zum Erreichen eines vordefinierten Abbruchkriteriums; und
- ein Prognosemodul, welches ausgebildet ist, ein Prognostizieren von zumindest einem Zeitverlauf des durchfließenden Wassers ab dem definierten Abbrechen des messtechnischen Erfassens der wenigstens zwei Parameter, basierend auf den bis zum definierten Abbrechen wenigstens zwei messtechnisch erfassten Parametern durchzuführen.

Gemäß einem dritten Aspekt wird die Aufgabe gelöst mit einem Computerprogrammprodukt, welches ausgebildet ist, das vorgeschlagene Verfahren auszuführen.

Vorteilhafte Weiterbildungen der Vorrichtung sind Gegenstand von jeweils abhängigen Ansprüchen.

Beispielsweise kann beim Verfahren vorgesehen sein, dass unter (iv) mittels des Prognosemoduls ferner ein Zeitverlauf eines Drucks des aus dem Hydranten ausfließenden und durch die elektronische Prüfvorrichtung durchfließenden Wassers und/oder der Öffnungsgrad einer Armatur zur Steuerung des Wasserdurchflusses prognostiziert wird.

Beispielsweise kann beim Verfahren vorgesehen sein, dass der definierte Zielwert wenigstens eines aus Folgendem ist: definierter Wasserdurchfluss pro Zeiteinheit, definierter Druck des Wassers innerhalb der elektronischen Prüfvorrichtung, definierte Stellung der Armatur, definierte Dauer des messtechnischen Erfassens.

Beispielsweise kann beim Verfahren vorgesehen sein, dass vor dem messtechnischen Erfassen der wenigstens zwei Parameter ferner ein zeitlich gemittelter Wasserruhedruck erfasst wird, bei dem kein Wasser durch die elektronische Prüfvorrichtung fließt, wobei der zeitlich gemittelte Wasserruhedruck dem Prognosemodul zugeführt wird.

Im Falle, dass ein definierter Wert einer Druckschwankung überschritten wird, kann auf diese Weise die Prüfzeit verlängert wird. Beispielsweise kann der Ruhedruck, sowie der Wert der Druckschwankung (Delta zwischen Maximal- und Minimaldruck) über einen definierten Zeitraum ermittelt und anschließend gemittelt werden. Mit dem Ruhedruck und der Druckschwankung liegen wichtige Informationen vor, die in einer Karte dargestellt werden können und Schwankungen im Wasserversorgungsnetz anzeigen.

Beispielsweise kann beim Verfahren vorgesehen sein, dass das Prognosemodul zum Prognostizieren eines aus Folgendem verwendet: hydraulisches Modell, trainierter Algorithmus basierend auf Machine Learning.

Beispielsweise kann beim Verfahren vorgesehen sein, dass nach dem Abbrechen des messtechnischen Erfassens der wenigstens zwei Parameter die Armatur der elektronischen Prüfvorrichtung definiert geschlossen wird.

Beispielsweise kann beim Verfahren vorgesehen sein, dass die Armatur wenigstens teilweise händisch und/oder wenigstens teilweise motorisch betätigt wird.

Beispielsweise kann beim Verfahren vorgesehen sein, dass die Armatur im Öffnungsvorgang mittels einer Reglereinrichtung, vorzugsweise eines PID-Reglers, zeitoptimiert und/oder unter Überwachung des Wasserdrucks auf einen Restdruck (d₀) geregelt wird. Der Restdruck kann dabei definiert festgelegt sein, beispielsweise auf einen Druckwert von 1.5 bar.

Beispielsweise kann beim Verfahren vorgesehen sein, dass eine Öffnungsgeschwindigkeit und/oder eine Schließgeschwindigkeit der Armatur von der Reglereinrichtung definiert begrenzt wird.

Dies kann günstig sein, damit die Armatur nicht zu rasch geöffnet oder geschlossen wird, um Druckschläge im Wasserversorgungsnetz zu verhindern.

Beispielsweise kann beim Verfahren vorgesehen sein, dass ferner wenigstens einer der folgenden Parameter des durch die elektronische Prüfvorrichtung durchfließenden Wassers messtechnisch erfasst wird: chemische Eigenschaften und/oder physikalische Eigenschaften, insbesondere Temperatur, Farbe, Materialanreicherung, Leitfähigkeit, pH-Wert des Wassers.

Beispielsweise kann beim Verfahren vorgesehen sein, dass im Falle, dass eine über einen definierten Wert vorliegende Materialanreicherung im Wasser gemessen wird, der Prüfvorgang solange verlängert wird, bis der Wert der Materialanreicherung des Wassers wieder unter den definierten Wert gesunken ist.

Auf diese Weise kann eine Art Nachspülungseffekt erreicht werden, wodurch die Qualität des Wassers, z.B. in einem angrenzenden Rohrnetz, wieder ein vorgesehenes Qualitätsniveau erreichen kann.

Beispielsweise kann beim Verfahren vorgesehen sein, dass das Prognostizieren mittels des Prognosemoduls wenigstens teilweise als ein Computerprogrammprodukt und/oder wenigstens teilweise als eine Hardware implementiert ist, wobei das Computerprogrammprodukt und/oder die Hardware wenigstens teilweise innerhalb der elektronischen Prüfvorrichtung und/oder teilweise extern von der elektronischen Prüfvorrichtung angeordnet und durchgeführt wird.

Beispielsweise kann beim Verfahren vorgesehen sein, dass während der Messung die geolokale Position des Messgerätes und/oder Datum und Uhrzeit mittels eines GPS-Empfängers ermittelt und mitsamt den Messdaten gespeichert werden. Vorteilhaft kann auf diese Weise in Kombination mit einer fälschungssicheren Speicherung, die Prüfung örtlich und/oder zeitlich nachgewiesen werden.

Beispielsweise kann bei der elektronischen Prüfvorrichtung vorgesehen sein, dass das Prognosemodul wenigstens teilweise innerhalb der elektronischen Prüfvorrichtung und/oder wenigstens außerhalb der elektronischen Prüfvorrichtung angeordnet ist.

Vorteilhaft sind auf diese Art und Weise unterschiedliche Ausbildungen und Anordnungen des Prognosemoduls implementierbar, wodurch eine hohe Flexibilität der Prüfvorrichtung unterstützt ist.

Beispielsweise kann bei der elektronischen Prüfvorrichtung vorgesehen sein, dass sie weiterhin ein zweites Anschlusselement zum Anschließen einer Ausströmvorrichtung aufweist.

Bei hohem Wasserdruck wird auf diese Weise ein geordnetes Abfließen des durch den Prüfprozess verbrauchten Wassers unterstützt, wodurch das Wasser auf kontrollierte Weise aus der Prüfvorrichtung in die Umgebung austreten kann.

Die Erfindung wird im Folgenden mit weiteren Merkmalen und Vorteilen anhand von mehreren Figuren im Detail beschrieben. Gleiche bzw. funktionsgleiche Elemente haben gleiche Bezugszeichen. Die Figuren sind insbesondere zur prinzipiellen Erläuterung des vorgeschlagenen Verfahrens und der vorgeschlagenen elektronischen Prüfvorrichtung vorgesehen und müssen nicht unbedingt maßstabsgetreu ausgeführt sein. Für die Offenbarung unwesentliche Elemente werden nicht näher erläutert.

Offenbarte Verfahrensmerkmale ergeben sich analog aus entsprechenden Vorrichtungsmerkmalen und umgekehrt. Dies bedeutet insbesondere, dass sich technische Merkmale, Vorteile und Ausführungen betreffend das Verfahren zur Prüfung eines Hydranten in analoger Weise aus entsprechenden technischen Merkmalen, Vorteilen und Ausführungen betreffend die elektronische Prüfvorrichtung zum Prüfen eines Hydranten ergeben und umgekehrt. Alle offenbarten Ausführungsformen sind lediglich exemplarisch, es können daher andere, hier nicht detailliert erläuterte Ausführungsformen vorgesehen sein, die nicht alle offenbarten Merkmale enthalten müssen.

Die nachfolgend verwendete Formulierung "bzw." umfasst insbesondere auch die Formulierung "und/oder". Alle nachfolgend genannten Zahlenwerte (z.B. betreffend Durchflussmenge des Wassers, Druck des Wassers, Öffnungsgrad der Armatur, Zeiten, etc.) sind lediglich als beispielhaft zu verstehen.

In den Figuren zeigt:
- FIG. 1: ein zeitliches Diagramm mit Parametern eines konventionellen Prüfvorgangs eines Hydranten;
- FIG. 2: ein Blockdiagramm einer exemplarischen Ausführungsform einer elektronischen Prüfvorrichtung zur Prüfung eines Hydranten;
- FIG. 3: eine Gesamtanordnung mit einem an eine Wasserversorgung angeschlossenen Hydranten, einer Ausführungsform einer elektronischen Prüfvorrichtung und einer optional vorgesehenen Ausströmvorrichtung;
- FIG. 4: ein zeitliches Diagramm mit Parametern eines vorgeschlagenen exemplarischen Prüfvorgangs eines Hydranten; und
- FIG. 5: ein prinzipielles exemplarisches Ablaufdiagramm eines vorgeschlagenen Verfahrens zum Prüfen eines Hydranten.

### Beschreibung von Ausführungsformen

Im Zusammenhang mit der vorliegenden Offenbarung wird unter einer Leistung eines Hydranten insbesondere eine Wasser-Durchflussmenge durch den Hydranten verstanden, zum Beispiel gemessen in Liter pro Minute. In Österreich ist ein derartiger Wert beispielsweise in der ÖVGW W77 Richtlinie festgelegt. Die Leistung eines Hydranten definiert eine Menge an Wasser, die ein Hydrant pro Zeiteinheit liefern kann. Dieser Begriff wird häufig in Bezug auf die Wassermenge pro Minute verwendet, die der Hydrant zur Brandbekämpfung oder anderen Notfällen bereitstellen kann. Die Leistung eines Hydranten wird üblicherweise in Litern pro Sekunde (l/s) oder Litern pro Minute (l/min) gemessen. Faktoren, die die Leistung eines Hydranten beeinflussen können, sind insbesondere:
- Wasserdruck im Leitungssystem: Ein höherer Druck ermöglicht eine tendenziell größere Wassermenge pro Zeiteinheit
- Durchmesser des Anschlusses: Ein größerer Durchmesser der Leitung oder des Anschlusses weist geringere Rohrreibungsverluste auf und sorgt dadurch für mehr Durchfluss
- Typ des Hydranten: Es gibt verschiedene Hydrantenarten, z. B. Über- und Unterflurhydranten, die unterschiedliche Leistungen haben
- Zustand und Wartung: Ein defekter Hydrant hat zum Beispiel eine reduzierte Leistung, wenn das Hauptventil nicht mehr vollständig öffnet.

Ein typischer Hydrant kann, je nach Typ und Bedingungen, eine Leistung von etwa 500 Liter/Minute bis etwa >2000 Liter/Minute erbringen. In vielen Gemeinden und Städten gibt es Mindestanforderungen an die Leistung von Hydranten, um sicherzustellen, dass im Brandfall ausreichend Wasser zur Verfügung steht. Für die Feuerwehr ist die Leistung eines Hydranten entscheidend, da bei einem Brand eine bestimmte Mindestmenge an Wasser benötigt wird, um die Flammen effizient bekämpfen zu können. Die Leistungsfähigkeit eines Hydranten spielt also eine wesentliche Rolle bei der Planung und Positionierung von Hydranten in Wohn- und Gewerbegebieten.

Zusammengefasst beschreibt die Leistung eines Hydranten die Kapazität, Wasser in einer bestimmten Rate bereitzustellen, was maßgeblich von Druck, Durchmesser und Wartung abhängt. Somit können typisch baugleiche Hydranten in unterschiedlichen Umgebungen unterschiedliche Leistungen erbringen.

Herkömmliche Prüfverfahren können nachteilig eine große Menge an Wasser verbrauchen, das durch die Prüfvorrichtung durchfließt und in die Umgebung gelangt, was einerseits problematisch für die Umgebung sein kann und andererseits mit großen Ressourcen verbunden sein kann, z.B. hinsichtlich zeitlichem Aufwand, Stromverbrauch, Betreuung des Prüfvorgangs durch Bedienpersonal, usw. Ferner können durch die hohen Ausflussmengen des Wassers hohe Druckschwankungen und Fließgeschwindigkeiten im Versorgungsnetz generiert werden, die das Versorgungsnetz stark belasten und unter Umständen Ablösungen von Inkrustationen verursachen, die eine Wasserqualität beeinträchtigen kann.

Wünschenswert ist es daher, ein verbessertes Prüfverfahren bereitzustellen, welches ressourcenschonend durchgeführt werden kann und eine effiziente Prüfung des Hydranten realisiert. Unter dem Wasserrestdruck d₀ wird nachfolgend ein spezifischer Druckwert d0 des Wassers verstanden, bis zu dem der Druck bei der Prüfung durch Öffnen der Armatur 40 (z.B. Motorventil) abgesenkt wird, wobei der Druckwert anschließend durch Schließen der Armatur 40 wieder den Ruhedruck d_{R} erreicht. Beispielsweise kann der Wasserrestdruck auf 1.5 bar festgelegt sein, kann aber auch andere vordefinierte spezifische Werte annehmen.

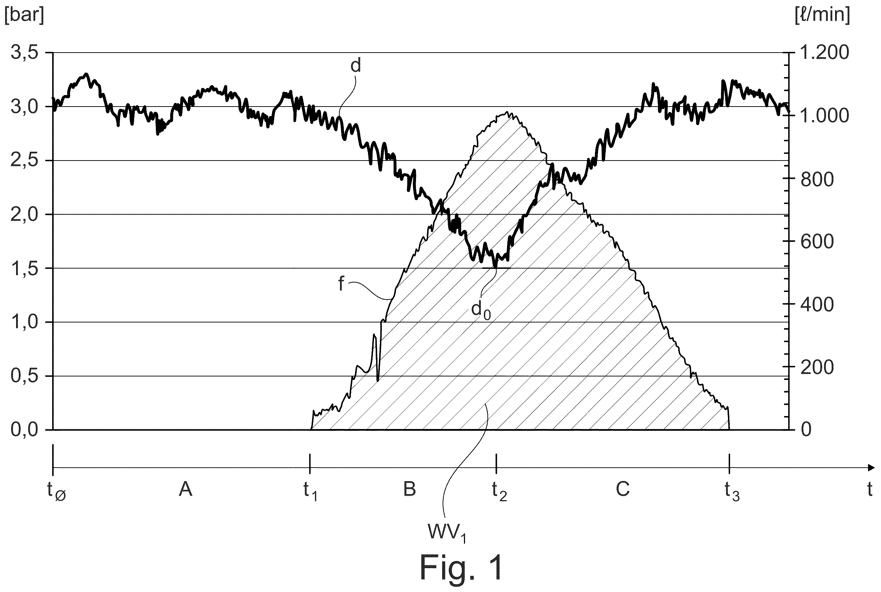

FIG. 1 ist ein Zeitdiagramm mit Parametern eines herkömmlichen Verfahrens zum Prüfen eines Hydranten beginnend bei einem Zeitpunkt t₀. Auf der x-Achse sind zeitliche Verläufe eines Drucks d innerhalb einer elektronischen Prüfvorrichtung (nicht dargestellt) sowie eines Wasserdurchflusses f durch die Prüfvorrichtung aufgetragen. Auf den beiden y Achsen sind Werte des Wasserdrucks in bar sowie des Wasserdurchflusses in l/min aufgetragen, wobei alle angegebenen Zahlenwerte lediglich exemplarisch zu verstehen sind.

Erkennbar ist, dass in einer Phase A beginnend beim Zeitpunkt t₀ der Ruhedruck d(t) innerhalb der elektronischen Prüfvorrichtung im Wesentlichen konstant ist und gewisse zeitliche Schwankungen aufweist, die von Zuständen innerhalb des Versorgungsnetzes stammen können. Zum Zeitpunkt t₁ zu Beginn einer Phase B wird eine Armatur 40 (nicht dargestellt) der Prüfvorrichtung geöffnet, wodurch Wasser aus dem Hydranten 200 (nicht dargestellt) ausfließt, in die Prüfvorrichtung eintritt und durch diese hindurchfließt, wobei der Wasserdurchfluss sensorisch bzw. messtechnisch erfasst wird. Dadurch sinkt der Wasserdruck innerhalb der Prüfvorrichtung bis auf den Restdruck d₀ (Zielwert des Drucks), wobei bei diesem Zielwert die maximale Menge an Wasser durch die Prüfvorrichtung hindurchfließt. Ein Ruhedruck beträgt ca. 3.0 bar, der allerdings mit deutlichen Schwankungen unterlegt ist, bedingt durch Druckänderungen im Wasserversorgungsnetz.

Anschließend wird in einer Phase C beginnend zum Zeitpunkt t₂ die Armatur wieder geschlossen, wodurch sich der Wasserdruck d innerhalb der Prüfvorrichtung wiederum auf den ursprünglichen Ruhedruck (statischer Druck) erhöht. In Phase C beginnend zum Zeitpunkt t₂ schließt die Armatur mit einer definierten Geschwindigkeit, sodass am Ende von Phase C zum Zeitpunkt t₃ der Ruhedruck innerhalb der Prüfvorrichtung wieder hergestellt ist.

Im Ergebnis wird bei dieser Durchflussmessung die maximale Durchflussmenge beim Restdruck d₀ erreicht, wobei in den Phasen B und C der kumulierte Wasserdurchfluss WV₁ durch die Prüfvorrichtung des Hydranten ca. 1.069 l beträgt. Der kumulierte Wasserverbrauch WV₁ ist in FIG. 1 als eine schraffierte Fläche unterhalb des Durchflussverlaufs f(t) dargestellt.

Die geschilderte konventionelle Prüfung des Hydranten kann mit einem hohen Wasserverlust verbunden sein, wobei Wasser unter hohem Druck aus der Prüfvorrichtung austritt und damit die Umgebung belastet und/oder weitere nachteilige Effekten nach sich ziehen kann.

Der Nachteil des beschriebenen konventionellen Verfahrens liegt darin, dass die hydraulische Belastung des Rohrnetzes sehr hoch sein kann, was unter Umständen zu Trübungen und Druckschwankungen im Rohrleitungsnetz führen kann. Problematisch ist der hohe Wasserverbrauch, sowie der hohe Wasserausfluss am Ort der Messung. Das abfließende Wasser (teils mehrere 1.000 Liter) kann zu Gefahren im angrenzenden Straßenverkehr, lokalen Überflutungen oder ausgespülten Grünflächen führen.

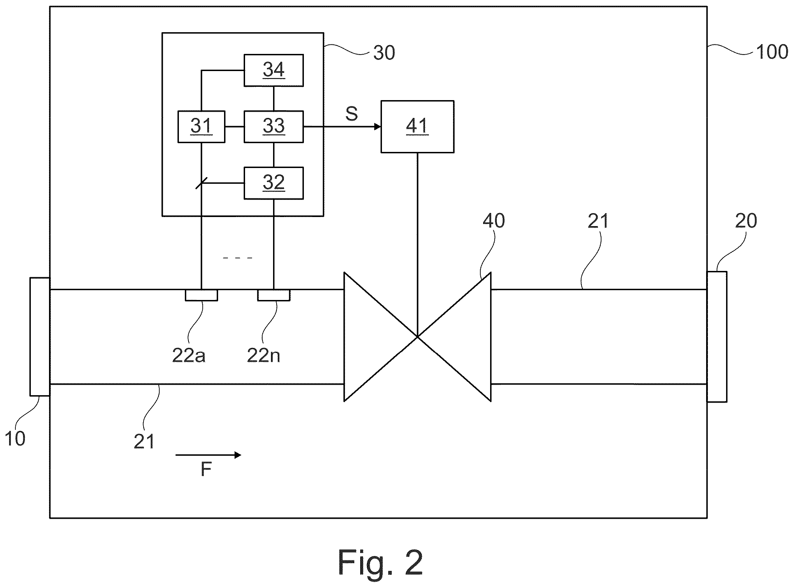

Vorgeschlagen wird mit der vorliegenden Offenbarung ein verbessertes Verfahren, durch das die Phasen B und C des Prüfprozesses erheblich verkürzt durchlaufen werden können. FIG. 2 zeigt ein Blockdiagramm einer exemplarischen Ausführungsform einer dazu verwendbaren vorgeschlagenen elektronischen Prüfvorrichtung 100.

Die elektronische Prüfvorrichtung 100 umfasst, vorzugsweise an gegenüberliegend angeordneten Endabschnitten, ein erstes Anschlusselement 10 und ein zweites (optionales) Anschlusselement 20. An das erste Anschlusselement 10 kann ein an eine Wasserversorgung (Wasserversorgungsleitung, Wasserversorgungsnetz) angeschlossener Hydrant 200 (nicht dargestellt) angeschlossen werden, dessen austretendes Wasser in ein Rohrelement 21 der elektronischen Prüfvorrichtung 100 eintritt. Innerhalb der elektronischen Prüfvorrichtung 100 fließt das Wasser im Rohrelement 21 in einer angedeuteten Fließrichtung F, wobei mittels einer händisch oder elektromotorisch betätigbaren Armatur 40 (z.B. Stellventil, Motorventil) der Wasserdurchfluss durch die elektronische Prüfvorrichtung 100 händisch oder elektromotorisch verstellt werden kann.

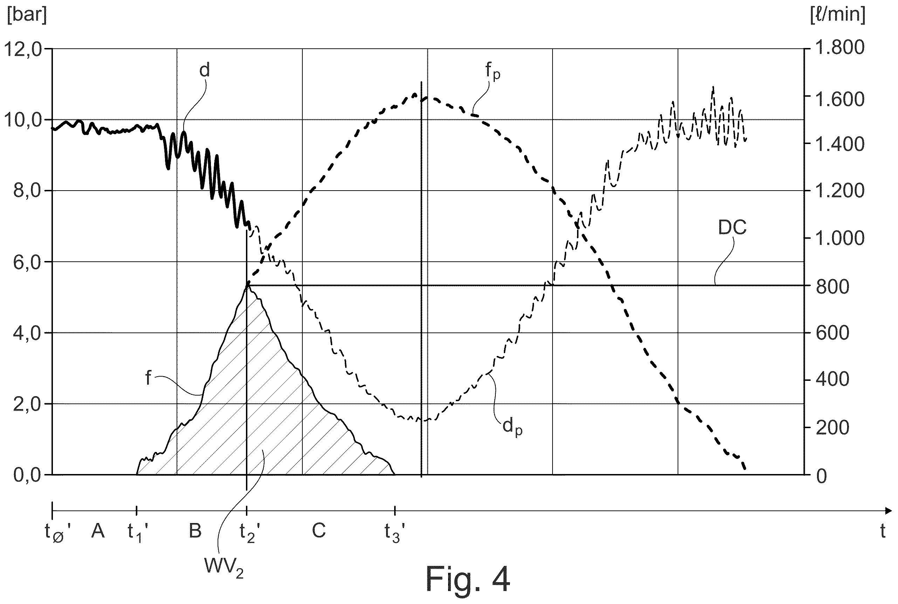

Die elektronische Prüfvorrichtung 100 umfasst ferner eine elektronische Ermittlungseinrichtung 30 mit einem Energieversorgungsmodul 31 (z.B. Batterie, Akkumulator), welches zur elektrischen Energieversorgung von elektrischen und elektronischen Komponenten der elektronischen Prüfvorrichtung 100 vorgesehen ist. Diese umfassen ein Prognosemodul 32 und eine optionale Reglereinrichtung 33. Das elektronische Prognosemodul 32 ist ausgebildet und dafür vorgesehen, mittels zugeführten messtechnisch erfassten Werten, die bis zu einem definierten Abbruchzeitpunkt der Prüfung des Hydranten 200 ermittelt worden sind, weitere Parameter der Prüfung zu prognostizieren, z.B. einen weiteren Verlauf des Wasserdurchflusses durch die elektronische Prüfvorrichtung 100. Die Funktionsweise des Prognosemoduls 32 wird weiter unten im Zusammenhang mit FIG. 4 noch näher erläutert.

In der Ausführungsform der elektronischen Prüfvorrichtung 100 von FIG. 2 ist das Prognosemodul 32 innerhalb der elektronischen Prüfvorrichtung 100 angeordnet, es kann aber auch außerhalb der elektronischen Prüfvorrichtung 100 vorgesehen sein und wird in diesem Fall von einem optionalen Kommunikationsmodul 34 drahtgebunden oder funkbasiert mit Daten angesteuert. Alle gezeigten Komponenten der elektronischen Ermittlungseinrichtung 30 sind untereinander funktional verbunden.

Vorzugsweise kann die elektronische Prüfvorrichtung 100 portabel ausgebildet sein, kann in einer alternativen Ausführungsform aber auch fest verbaut in einem Servicefahrzeug oder dergleichen ausgebildet sein (nicht dargestellt).

Das Prognosemodul 32 kann beispielsweise einen auf Machine Learning basierenden Algorithmus ausführen, kann aber zusätzlich und/oder alternativ auch auf definierten Algorithmen unter Verwendung von relevanten physikalischen Prinzipien und Modellen basieren, wie beispielsweise: Bernoulli'sche Gleichung, Hydraulisches Modell basierend auf strömungstechnischen Prinzipien und/oder dem Energieerhaltungssatz, etc. Bei der Ausführung als Machine Learning basierter Algorithmus ist es vorteilhaft, die dazu erforderlichen Trainingsvorgänge mit einer im Wesentlichen gleichartigen elektronischen Prüfvorrichtung durchzuführen. In technischer Hinsicht kann das Prognosemodul 32 wenigstens teilweise als eine Software und/oder wenigstens teilweise als eine Hardware (elektronische Schaltkreise, FPGAs, elektronische Speicherelemente, usw.) ausgebildet sein, kann aber beispielsweise auch vollständig in Software oder vollständig in Hardware implementiert sein. Vorteilhaft ist durch die Implementierung als eine Software eine schnelle und komfortable Adaptierbarkeit des Prognostizierens mittels des Prognosemoduls 32 unterstützt.

Das Prognosemodul 32 kann in einer Variante innerhalb der elektronischen Prüfvorrichtung 100 angeordnet sein, kann in einer Alternative allerdings auch außerhalb der elektronischen Prüfvorrichtung 100 angeordnet sein (nicht dargestellt), zum Beispiel innerhalb einer Rechnervorrichtung und kann zum Beispiel auch cloudbasiert ausgebildet sein. Vorteilhaft kann das Prognosemodul 32 auf diese Weise extern von der Prüfvorrichtung 100 angeordnet sein.

Die Ermittlungseinrichtung 30 umfasst ein optionales Kommunikationsmodul 34 (z.B. basierend auf Bluetooth, WLAN, etc.), welches die sensorisch erfassten Messwerte und Parameter an eine externe Recheneinrichtung (z.B. Laptop) übermittelt, wobei auch das Prognosemodul 32 innerhalb der Recheneinrichtung angeordnet ist und somit außerhalb der elektronischen Prüfvorrichtung 100 angeordnet ist. Beispielsweise kann die externe Recheneinrichtung auch cloudbasiert ausgebildet sein.

Innerhalb des Rohrelements 21 flussaufwärts der Armatur 40 angeordnete Sensoren 22a...22n sind vorgesehen, um physikalische und/oder chemische Eigenschaften des durch die Prüfvorrichtung 100 hindurchfließenden Wassers innerhalb des Rohrelements 21 sensorisch zu erfassen und elektrisch an die Ermittlungseinrichtung 30 zu übermitteln.

Vorteilhaft ergibt sich dadurch die Möglichkeit, dass die prognostizierende Ermittlung der Parameter innerhalb oder außerhalb der elektronischen Prüfvorrichtung 100 vorgenommen werden kann. An das zweite Anschlusselement 20 kann direkt oder über eine zweite Anschlussleitung 220 (nicht dargestellt) eine Ausströmvorrichtung 300 (nicht dargestellt) angeschlossen werden. Rückstoßkräfte bedingt durch einen Düseneffekt lassen sich mit der Ausströmvorrichtung 300 wirksam eliminieren bzw. zumindest stark reduzieren. Erreicht wird dies durch Umlenkelemente bzw. einem vergrößerten Querschnitt innerhalb der Ausströmvorrichtung 300.

Die Reglereinrichtung 33 kann zur Erreichung des Restdrucks d₀ (z.B. 1.5 bar) eine Stellgröße S an eine Verstelleinrichtung 41 (z.B. elektrischer Stellmotor) zuführen, wobei die Stellgröße S z.B. ein Prozentwert eines Gesamtstellbereichs der Armatur 40 sein kann. Regeltechnisch wird mittels der Reglereinrichtung 33 jeweils ein aktueller Stellwert S an die Verstelleinrichtung 41 übergeben. Übergelagert kann noch limitiert sein, falls ein Öffnungsvorgang der Armatur 40 zu schnell erfolgt, dass in diesem Fall auch noch die Geschwindigkeit des Verstellvorgangs der Armatur 40 begrenzt und auf diese Weise Druckschläge innerhalb des Rohrleitung 21 verhindert werden.

Denkbar ist, dass bei leistungsschwachen Hydranten 200 bis auf den Restdruck d₀ von 1.5 bar heruntergeregelt wird, wobei die erwartete, vorab spezifizierte Durchflussmenge allerdings nicht erreicht wird. In diesem Fall wird eine konventionelle Messung durchgeführt. Das ist jedoch in der Regel unkritisch, da die Wassermenge derart gering ist, dass die schädlichen Effekte ein begrenztes Ausmaß haben.

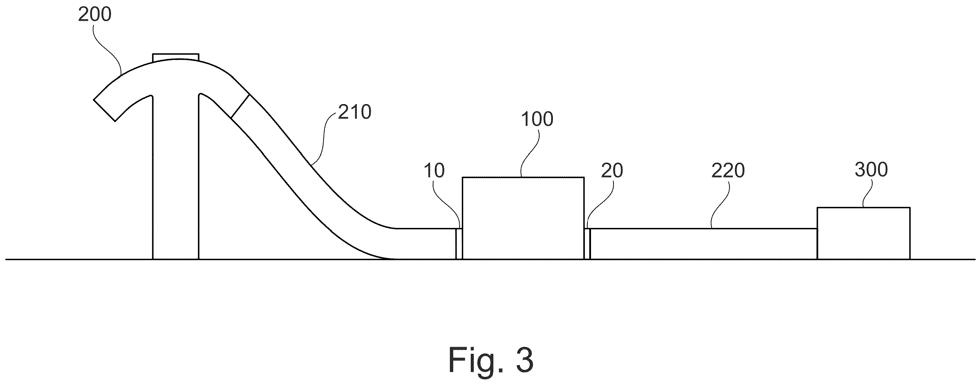

FIG. 3 zeigt eine Gesamtanordnung mit einem Hydranten 200, an den die vorgeschlagene elektronische Prüfvorrichtung 100 über das erste Anschlusselement 10 angeschlossen ist. Zu diesem Zweck wird der Hydrant 200 mit einer ersten Anschlussleitung 210 an das erste Anschlusselement 10 der elektronischen Prüfvorrichtung 100 angeschlossen. Optional kann an das zweite Anschlusselement 20 eine zweite Anschlussleitung 220 sein, an welches eine Ausströmungsvorrichtung 300 angeschlossen werden kann. Die Ausströmungsvorrichtung 300 ist insbesondere vorgesehen, um Wasserdruck abzubauen und um Wasser in geordneter Weise in die Umgebung abzuleiten. Zu diesem Zweck kann die an sich bekannte Ausströmvorrichtung 300 Umleitelemente (z.B. innenliegende Schlitz- oder Lochblenden) aufweisen, mit denen das Wasser innerhalb der Ausströmvorrichtung 300 umgeleitet wird und mechanische Kräfte kompensiert bzw. vergleichmäßigt werden.

Während der Prüfung kann optional auch die Geoposition der Prüfvorrichtung 100, zum Beispiel mittels integriertem GPS-Empfänger erfasst und optional auch gespeichert werden, wodurch eine eindeutige und automatisierte Zuordnung zum nächstgelegenen Hydranten 200 ermöglicht ist. Eine mögliche Fehlbedienung, sowie die Möglichkeit der Manipulation kann auf diese Weise reduziert sein.

Nachfolgend wird anhand von FIG. 4 ein Funktionsprinzip des vorgeschlagenen Verfahrens und der vorgeschlagenen elektronischen Prüfvorrichtung 100 näher erläutert. Vorgesehen ist die messtechnische Erfassung von zumindest zwei Parametern, um den Prüfvorgang bei Erreichen eines Zielwerts eines vordefinierten Parameters abzubrechen. In FIG. 4 ist erkennbar, dass in einer Phase A, beginnend zum Zeitpunkt t₀' der statische Druck (Ruhedruck) ermittelt wird und anschließend in Phase B beginnend zum Zeitpunkt t₁' die Armatur 40 geöffnet wird, wodurch Wasser aus dem Hydranten 200 ausfließt und in die elektronische Prüfvorrichtung 100 einfließt und zumindest die Durchflussmenge des Wassers messtechnisch ermittelt wird. Die Abbruchbedingung für den Prüfvorgang ist in diesem Falle ein Erreichen einer vordefinierten Durchflussmenge von beispielsweise 800 l/min, wie in FIG. 4 mittels einer Linie DC angedeutet.

Ab einem Zeitpunkt t2' wird die Armatur 40 wieder geschlossen (z.B. mittels eines linearen Verstellvorgangs unter Verwendung der Verstelleinrichtung 41), wobei die bis dahin ermittelten Werte an das Prognosemodul 32 übermittelt werden. Das Prognosemodul 32 führt in weiterer Folge, basierend auf den zugeführten Parametern eine prognosetechnische Ermittlung von zumindest dem weiteren zeitlichen Verlauf des Durchflusses durch, wie im strichlierten Verlauf des prognostizierten Durchflusses fₚ von FIG. 4 angedeutet. Die Armatur 40 kann auch mittels der Reglereinrichtung 33 auf den spezifizierten Parameter geregelt werden.

Optional kann bis zum Zeitpunkt t1', d.h. bis zum Öffnen der Armatur 40, auch ein Ruhedruck d_{R} über einen definierten Zeitraum, beispielsweise ca. 10s bis ca. 20s ermittelt werden und als zusätzlicher Parameter an das Prognosemodul 32 übergeben werden. Wenn ein gewisser Prozentsatz an Druckschwankungen im Ruhedruck überschritten wird, kann dies ein Hinweis auf schlecht eingestellte Pumpen sein, und dergleichen. Vorteilhaft können die Werte des Ruhedrucks sowie der Druckschwankung in einschlägigen Karten hinterlegt werden, um dadurch Druckschwankungen im Versorgungsnetz geeignet darzustellen.

Ferner kann auch vorgesehen sein, in einem Ruhezustand einen statisch gemittelten Ruhedruck d_{R} zu ermitteln, wobei Schwankungen des Ruhedrucks d_{R} erfasst werden und auf diese Weise wichtige Aussagen über den Gesamtzustand des Wasserversorgungsnetzes, an das der Hydrant 200 angeschlossen ist, getroffen werden können.

Der statische Ruhedruck d_{R} in einem Trinkwassernetz kann den örtlichen hydraulischen Verhältnissen beeinflusst sein, wodurch es zu Druckschwanken kommen kann. Es ist daher zweckmäßig, nicht nur einen (gemittelten) Wert zu messen, sondern ein Druck-Zeit-Diagramm des Ruhedrucks d_{R} aufzuzeichnen und die Schwankungsbreite zu ermitteln. Hohe Druckschwankungen können zu problematischen Dauerbelastungen der Rohre führen und können Schäden in der Hausinstallation verursachen. Derartige Druckschwankungen können zum Beispiel von schlecht eingestellten Pumpen (drehzahlgesteuert) oder wartungsbedürftigen Regelventilen verursacht werden, wobei die Auswertung dieser Druckschwankungen dem Wasserversorger helfen können, die Probleme zu beheben.

Im Ausführungsbeispiel von FIG. 4 wird auf die vordefinierte Durchflussmenge 800l/min zum Abbruchzeitpunkt t2' geregelt. Es kann der Fall eintreten, dass in einem Anwendungsfall der Wasserdruck derart gering ist, dass diese erwartete Durchflussmenge auch bei einer Regelung auf den Restdruck d₀ von 1,5 bar nicht erreicht wird. In diesem Falle ist die Wassermenge jedoch derart gering, dass in diesem Falle ein Abbruch des Prüfvorgangs gar nicht erforderlich ist und die herkömmliche Messung durchgeführt wird, wie anhand von FIG. 2 dargestellt. Auch der Wert des Ruhedrucks d_{R} kann als Eingangsgröße für das Prognosemodul 32 verwendet werden.

Somit liegt bis zum Abbruchzeitpunkt t2' eine reelle Messung vor, alle zeitlich danach liegenden Parameter werden mittels des Prognosemoduls 32 prognostiziert. Im Beispiel von FIG. 4 wurde der Prüfprozess somit nach Erreichen des Durchflusses von 800 l/min abgebrochen. Es kann aber auch unter Erreichen eines definierten Restdruckes d₀ abgebrochen werden.

Wenn beispielsweise mittels wenigstens eines der Sensoren 22a...22n festgestellt wird, dass ein Trübungsgrad im Wasser überschritten ist, was z.B. durch abgelöste Inkrustationen im Rohrleitungsnetz, die durch den Wasserdruck der Prüfung hervorgerufen wurden, verursacht sein kann, kann ferner vorgesehen sein, dass der Prüfvorgang verlängert wird, wodurch eine Art Nachspülungseffekt erreicht wird. Im Ergebnis wird dadurch die Prüfung derart lange durchgeführt, bis die Trübung des Wassers aufgrund des dadurch erreichten Spülungseffekts wieder unterschritten sind.

Man erkennt in FIG. 4 eine Fläche WV₂ des kumulierten Wasserverbrauchs bei einer Prüfung mittels des vorgeschlagenen Verfahrens. Vorteilhaft ist der kumulierte Wasserverbrauch WV2 deutlich geringer als der kumulierte Wasserverbrauch WV1, der beim konventionellen Prüfverfahren von FIG. 2 erreicht wird, was eine bedeutsame Verbesserung des Prüfvorgangs mit weniger Wasserverbrauch, geringerem Ressourcenaufwand und kürzerer Prüfzeit bedeutet. Im Ergebnis ist es auf diese Weise möglich, eine Leistungsfähigkeit des Hydranten 200, die regelmäßig auch von einer Leistungsfähigkeit der angeschlossenen Wasserversorgung abhängt, zu prüfen und örtliche Kommunen, zum Beispiel Feuerwehren über die Leistungsfähigkeit eines Gebietes mit Hydranten zu informieren.

Mit dem vorgeschlagenen Verfahren kann die Prüfung des Hydranten somit bereits vor Erreichen des gewünschten Restdrucks d₀ abgebrochen werden. Die bis dahin aufgezeichneten Messwerte können an das Prognosemodul 32 übertragen werden. Das Prognosemodul 32 kann den weiteren Verlauf der Messung berechnen und prognostizieren, wobei auch der gesuchte maximale Durchfluss bei gewünschtem Restdruck-Sollwert ermittelt werden kann. Der Abbruch der Messung kann zum Beispiel in Abhängigkeit eines bestimmten Druckes erfolgen, welcher höher liegt als der Restdruck-Sollwert, oder bei Erreichen eines bestimmten Durchflusswertes.

FIG. 4 stellt somit einen prognostizierten zeitlichen Druckverlauf dₚ und einen prognostizierten zeitlichen Durchflussverlauf d_{f} innerhalb der elektronischen Prüfvorrichtung 100 dar, die im Wesentlichen dem Wasserdurchfluss bzw. Wasserdruck innerhalb des Hydranten 200 entspricht, weil aufgrund der ersten Anschlussleitung 210 nur ein vernachlässigbar geringfügiger Druckverlust generiert wird.

Im Ergebnis können diese Weise Hydranten individuell sehr genaue Aussagen über die jeweilige Leistungsfähigkeit des Hydranten innerhalb des Versorgungsnetzes getroffen werden.

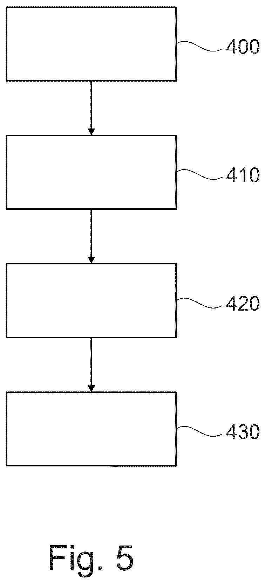

FIG. 5 zeigt einen prinzipiellen Ablauf eines exemplarischen Ablaufs des vorgeschlagenen Verfahrens zum Prüfen eines Hydranten 200.

In einem Schritt 400 erfolgt ein messtechnisches Erfassen von wenigstens zwei der folgenden Parameter: Zeitverlauf eines Wasserausflusses aus dem Hydranten 200 und durch eine elektronische Prüfvorrichtung 100, Zeitverlauf eines Drucks des aus dem Hydranten 200 ausfließenden und durch die elektronische Prüfvorrichtung 100 durchfließenden Wassers, Öffnungsgrad einer Armatur 40 zur Steuerung des Wasserdurchflusses.

In einem Schritt 410 erfolgt ein definiertes Abbrechen des messtechnischen Erfassens der unter (i) erfassten Parameter in Abhängigkeit von einem definierten Zielwert eines der wenigstens zwei messtechnisch erfassten Parameter.

In einem Schritt 420 erfolgt ein Übermitteln der wenigstens zwei messtechnisch erfassten Parameter an ein Prognosemodul 32. Schließlich erfolgt in einem Schritt 430 ein Prognostizieren von zumindest einem Zeitverlauf des durchfließenden Wassers ab dem definierten Abbrechen des messtechnischen Erfassens der wenigstens zwei Parameter mittels des Prognosemoduls 32, basierend auf den bis zum definierten Abbrechen wenigstens zwei messtechnisch erfassten Parametern.

Zusammenfassend ist mit dem vorgeschlagenen Verfahren unterstützt, in einem Versorgungsgebiet mehrere Hydranten auf effiziente Weise auf Leistungsfähigkeit prüfen zu können. Dabei kann insbesondere für leistungsstarke Hydranten der Prüfvorgang zeitoptimiert durchgeführt werden, da der Prüfprozess mit dem vorgeschlagenen Verfahren abgebrochen und Parameter mittels des Prognosemoduls zeitnah ermittelt werden können.

Für leistungsarme Hydranten, die nur einen geringen Ausfluss generieren, wird der Abbruch mit der vorliegenden Prüfvorrichtung nicht durchgeführt und es wird ein konventionelles Prüfverfahren durchgeführt, was jedoch aufgrund der geringen Leistungsfähigkeit in der Regel unkritisch ist. Im Ergebnis lassen sich Hydranten eines ganzen Versorgungsgebiets zeitoptimiert prüfen, wobei ermittelte Werte in einer einschlägigen Karte dargestellt werden. Mit anderen Worten, kann mittels des vorgeschlagenen Verfahrens eine Leistungsfähigkeit von leistungsstarken Hydranten in einem Versorgungsnetz zeitoptimiert und ressourcenschonend festgestellt werden.

Vorteilhaft kann die mittels des vorgeschlagenen Verfahrens ermittelte Leistung eines Hydranten in Löschwasserplänen dargestellt und beispielsweise der örtlichen/regionalen Feuerwehr zur Verfügung gestellt werden.

Obwohl vorgehend das Verfahren anhand von Wasserhydranten erläutert ist, versteht es sich von selbst, dass das vorgeschlagene Verfahren mit ähnlichen Vorteilen mit anderen flüssigen Medien, wie zum Beispiel flüssigen Schmierstoffen, flüssigen Gasen, Chemikalien, etc. in Industrieanlagen und dergleichen durchgeführt werden kann, in denen Drücke und Durchflüsse gemessen werden.

Ausführungsformen der Erfindung sind nachfolgend aufgelistet. Dabei muss nicht jede Ausführungsform alle genannten Merkmale aufweisen, vielmehr sind auch Ausführungsformen denkbar, die mehr, oder weniger oder alternative Merkmale aufweisen können. Merkmale aus Ausführungsformen können somit weggelassen bzw. in beliebiger Weise mit anderen Ausführungsformen kombiniert werden.

### Auflistung von Ausführungsformen:

1. Verfahren zum Prüfen eines an eine Wasserversorgung angeschlossenen Hydranten (200), aufweisend:
   (i) Messtechnisches Erfassen von wenigstens zwei der folgenden Parameter: Zeitverlauf eines Wasserausflusses aus dem Hydranten (200) und durch eine elektronische Prüfvorrichtung (100), Zeitverlauf eines Drucks des aus dem Hydranten (200) ausfließenden und durch die elektronische Prüfvorrichtung (100) durchfließenden Wassers, Öffnungsgrad einer Armatur (40) zur Steuerung des Wasserdurchflusses;
   (ii) Definiertes Abbrechen des messtechnischen Erfassens der unter (i) erfassten Parameter in Abhängigkeit von einem definierten Zielwert eines der wenigstens zwei messtechnisch erfassten Parameter;
   (iii) Übermitteln der wenigstens zwei messtechnisch erfassten Parameter an ein Prognosemodul (32); und
   (iv) Prognostizieren von zumindest einem Zeitverlauf des durchfließenden Wassers ab dem definierten Abbrechen des messtechnischen Erfassens der wenigstens zwei Parameter mittels des Prognosemoduls (32), basierend auf den bis zum definierten Abbrechen wenigstens zwei messtechnisch erfassten Parametern.
2. Verfahren nach Ausführungsform 1, wobei unter (iv) mittels des Prognosemoduls (32) ferner ein Zeitverlauf eines Drucks des aus dem Hydranten (200) ausfließenden und durch die elektronische Prüfvorrichtung (100) durchfließenden Wassers und/oder der Öffnungsgrad einer Armatur (40) zur Steuerung des Wasserdurchflusses prognostiziert wird.
3. Verfahren nach Ausführungsform 1 oder 2, wobei der definierte Zielwert wenigstens eines aus Folgendem ist: definierter Wasserdurchfluss pro Zeiteinheit, definierter Druck des Wassers innerhalb der elektronischen Prüfvorrichtung (100), definierte Stellung der Armatur (40), definierte Dauer des messtechnischen Erfassens.
4. Verfahren nach einer der vorhergehenden Ausführungsformen, wobei vor dem messtechnischen Erfassen der wenigstens zwei Parameter ferner ein zeitlich gemittelter Wasserruhedruck (d_{R}) erfasst wird, bei dem kein Wasser durch die elektronische Prüfvorrichtung (100) fließt
5. Verfahren nach Ausführungsform 3, wobei der zeitliche gemittelte Wasserruhedruck dem Prognosemodul (32) zugeführt wird.
6. Verfahren nach einer der vorhergehenden Ausführungsformen, wobei das Prognosemodul (32) zum Prognostizieren eines aus Folgendem verwendet: hydraulisches Modell, trainierter Algorithmus basierend auf Machine Learning.
7. Verfahren nach einer der vorhergehenden Ausführungsformen, wobei nach dem Abbrechen des messtechnischen Erfassens der wenigstens zwei Parameter die Armatur (40) der elektronischen Prüfvorrichtung (100) definiert geschlossen wird.
8. Verfahren nach einer der Ausführungsformen 2 bis 6, wobei die Armatur (40) wenigstens teilweise händisch betätigt wird.
9. Verfahren nach einer der Ausführungsformen 2 bis 6, wobei die Armatur (40) wenigstens teilweise motorisch betätigt wird.
10. Verfahren nach Ausführungsform 8, wobei die Armatur (40) im Öffnungsvorgang mittels einer Reglereinrichtung (33), vorzugsweise eines PID-Reglers, zeitoptimiert und/oder unter Überwachung des Wasserdrucks (d_{R}) auf einen Restdruck (d₀) geregelt wird.
11. Verfahren nach Ausführungsform 9, wobei eine Öffnungsgeschwindigkeit der Armatur (40) von der Reglereinrichtung (33) definiert begrenzt wird.
12. Verfahren nach Ausführungsform 10, wobei eine Schließgeschwindigkeit der Armatur (40) von der Reglereinrichtung (33) definiert begrenzt wird.
13. Verfahren nach einer der vorhergehenden Ausführungsformen, wobei ferner wenigstens einer der folgenden Parameter des durch die elektronische Prüfvorrichtung (100) durchfließenden Wassers messtechnisch erfasst wird:
   chemische Eigenschaften und/oder physikalische Eigenschaften, insbesondere Temperatur, Farbe, Trübung, Leitfähigkeit, pH-Wert des Wassers.
14. Verfahren nach Ausführungsform 12, wobei im Falle, dass eine über einen definierten Wert vorliegende Materialanreicherung im Wasser gemessen wird, der Prüfvorgang solange verlängert wird, bis der Wert der Materialanreicherung des Wassers wieder unter den definierten Wert gesunken ist.
15. Verfahren nach einer der vorhergehenden Ausführungsformen, wobei das Prognostizieren mittels des Prognosemoduls (32) wenigstens teilweise als ein Computerprogrammprodukt implementiert ist, wobei das Computerprogrammprodukt wenigstens teilweise innerhalb der elektronischen Prüfvorrichtung (100) und/oder teilweise extern von der elektronischen Prüfvorrichtung (100) durchgeführt wird.
16. Verfahren nach Ausführungsform 14, wobei das Prognostizieren mittels des Prognosemoduls (32) wenigstens teilweise als eine Hardware implementiert ist, wobei die Hardware wenigstens teilweise innerhalb der elektronischen Prüfvorrichtung (100) und/oder teilweise extern, beispielsweise cloudbasiert von der elektronischen Prüfvorrichtung (100) angeordnet ist.
17. Verfahren nach einer der vorhergehenden Ausführungsformen, wobei die Prüfvorrichtung (100) mit dem Internet verbunden ist und die erfassten Messdaten in einer zentralen Datenbank gespeichert werden.
18. Verfahren nach einer der vorhergehenden Ausführungsformen, wobei erfasste und ermittelte Messwerte fälschungssicher in einer Blockchain gespeichert werden.
19. Verfahren nach einer der vorhergehenden Ausführungsformen, wobei während der Messung die geolokale Position des Messgerätes sowie Datum und Uhrzeit mittels GPS-Empfänger ermittelt und mitsamt den Messdaten gespeichert wird.
20. Elektronische Prüfvorrichtung (100) zur Durchführung einer Prüfung eines Hydranten (200), aufweisend:
   - ein erstes Anschlusselement (10) zum Anschließen an den Hydranten (200);
   - eine elektronische Ermittlungseinrichtung (30) zum messtechnischen Erfassen von wenigstens zwei der folgenden Parameter: Zeitverlauf eines Wasserausflusses aus dem Hydranten (200) und durch die elektronische Prüfvorrichtung (100), Zeitverlauf eines Drucks des aus dem Hydranten (200) ausfließenden und durch die elektronische Prüfvorrichtung (100) durchfließenden Wassers, Öffnungsgrad einer Armatur (40) zur Steuerung des Wasserdurchflusses bis zum Erreichen eines vordefinierten Abbruchkriteriums; und
   - ein Prognosemodul (32), welches ausgebildet ist, ein Prognostizieren von zumindest einem Zeitverlauf des durchfließenden Wassers ab dem definierten Abbrechen des messtechnischen Erfassens der wenigstens zwei Parameter, basierend auf den bis zum definierten Abbrechen wenigstens zwei messtechnisch erfassten Parametern durchzuführen.
21. Elektronische Prüfvorrichtung (100) nach Ausführungsform 19, wobei das Prognosemodul (32) wenigstens teilweise innerhalb der elektronischen Prüfvorrichtung (100) und/oder wenigstens außerhalb der elektronischen Prüfvorrichtung (100) angeordnet ist.
22. Elektronische Prüfvorrichtung (100) nach einer der Ausführungsformen 19 oder 20, weiterhin aufweisend ein zweites Anschlusselement (20) zum Anschließen einer Ausströmvorrichtung (300).

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: 1. Anschlusselement
- 20: 2. Anschlusselement
- 21: Rohrelement
- 22a...22n: Sensoren
- 30: elektronische Ermittlungseinrichtung
- 31: elektrisches Energieversorgungsmodul
- 32: Prognosemodul
- 33: Reglereinrichtung
- 34: Kommunikationsmodul
- 40: Armatur
- 41: Verstelleinrichtung
- 100: elektronische Prüfvorrichtung
- 200: Hydrant
- 210: 1. Anschlussleitung
- 220: 2. Anschlussleitung
- 300: Ausströmvorrichtung
- 400...430: Verfahrensschritte
- d₀: Restdruck
- d_{R}: Ruhedruck
- fp: prognostizierter Durchfluss
- dp: prognostizierter Druckverlauf
- F: Fließrichtung
- S: Stellgröße
- WV₁: kumulierter Wasserverbrauch
- WV₂: kumulierter Wasserverbrauch

## Patentansprüche

1. Verfahren zum Prüfen eines an eine Wasserversorgung angeschlossenen Hydranten (200), aufweisend:
(i) Messtechnisches Erfassen von wenigstens zwei der folgenden Parameter: Zeitverlauf eines Wasserausflusses aus dem Hydranten (200) und durch eine elektronische Prüfvorrichtung (100), Zeitverlauf eines Drucks des aus dem Hydranten (200) ausfließenden und durch die elektronische Prüfvorrichtung (100) durchfließenden Wassers, Öffnungsgrad einer Armatur (40) zur Steuerung des Wasserdurchflusses;
(ii) Definiertes Abbrechen des messtechnischen Erfassens der unter (i) erfassten Parameter in Abhängigkeit von einem definierten Zielwert eines der wenigstens zwei messtechnisch erfassten Parameter;
(iii) Übermitteln der wenigstens zwei messtechnisch erfassten Parameter an ein Prognosemodul (32); und
(iv) Prognostizieren von zumindest einem Zeitverlauf des durchfließenden Wassers ab dem definierten Abbrechen des messtechnischen Erfassens der wenigstens zwei Parameter mittels des Prognosemoduls (32), basierend auf den bis zum definierten Abbrechen wenigstens zwei messtechnisch erfassten Parametern.

2. Verfahren nach Anspruch 1, wobei unter (iv) mittels des Prognosemoduls (32) ferner ein Zeitverlauf eines Drucks des aus dem Hydranten (200) ausfließenden und durch die elektronische Prüfvorrichtung (100) durchfließenden Wassers und/oder der Öffnungsgrad einer Armatur (40) zur Steuerung des Wasserdurchflusses prognostiziert wird.

3. Verfahren nach Anspruch 1 oder 2, wobei der definierte Zielwert wenigstens eines aus Folgendem ist: definierter Wasserdurchfluss pro Zeiteinheit, definierter Druck des Wassers innerhalb der elektronischen Prüfvorrichtung (100), definierte Stellung der Armatur (40), definierte Dauer des messtechnischen Erfassens.

4. Verfahren nach einem der vorhergehenden Ansprüche, wobei vor dem messtechnischen Erfassen der wenigstens zwei Parameter ferner ein zeitlich gemittelter Wasserruhedruck (d_{R}) erfasst wird, bei dem kein Wasser durch die elektronische Prüfvorrichtung (100) fließt, wobei der zeitlich gemittelte Wasserruhedruck dem Prognosemodul (32) zugeführt wird.

5. Verfahren nach einem der vorhergehenden Ansprüche, wobei das Prognosemodul (32) zum Prognostizieren eines aus Folgendem verwendet: hydraulisches Modell, trainierter Algorithmus basierend auf Machine Learning.

6. Verfahren nach einem der vorhergehenden Ansprüche, wobei nach dem Abbrechen des messtechnischen Erfassens der wenigstens zwei Parameter die Armatur (40) der elektronischen Prüfvorrichtung (100) definiert geschlossen wird.

7. Verfahren nach einem der Ansprüche 2 bis 6, wobei die Armatur (40) wenigstens teilweise händisch und/oder wenigstens teilweise motorisch betätigt wird.

8. Verfahren nach Anspruch 7, wobei die Armatur (40) im Öffnungsvorgang mittels einer Reglereinrichtung (33), vorzugsweise eines PID-Reglers, zeitoptimiert und/oder unter Überwachung des Wasserdrucks (d_{R}) auf einen Restdruck (d₀) geregelt wird.

9. Verfahren nach Anspruch 8, wobei eine Öffnungsgeschwindigkeit und/oder eine Schließgeschwindigkeit der Armatur (40) von der Reglereinrichtung (33) definiert begrenzt wird.

10. Verfahren nach einem der vorhergehenden Ansprüche, wobei ferner wenigstens einer der folgenden Parameter des durch die elektronische Prüfvorrichtung (100) durchfließenden Wassers messtechnisch erfasst wird: chemische Eigenschaften und/oder physikalische Eigenschaften, insbesondere Temperatur, Farbe, Materialanreicherung, Leitfähigkeit, pH-Wert des Wassers.

11. Verfahren nach Anspruch 10, wobei im Falle, dass eine über einen definierten Wert vorliegende Materialanreicherung im Wasser gemessen wird, der Prüfvorgang solange verlängert wird, bis der Wert der Materialanreicherung des Wassers wieder unter den definierten Wert gesunken ist.

12. Verfahren nach einem der vorhergehenden Ansprüche, wobei das Prognostizieren mittels des Prognosemoduls (32) wenigstens teilweise als ein Computerprogrammprodukt und/oder wenigstens teilweise als eine Hardware implementiert ist, wobei das Computerprogrammprodukt und/oder die Hardware wenigstens teilweise innerhalb der elektronischen Prüfvorrichtung (100) und/oder teilweise extern von der elektronischen Prüfvorrichtung (100) angeordnet und durchgeführt wird.

13. Elektronische Prüfvorrichtung (100) zur Durchführung einer Prüfung eines Hydranten (200), aufweisend:
- ein erstes Anschlusselement (10) zum Anschließen an den Hydranten (200);
- eine elektronische Ermittlungseinrichtung (30) zum messtechnischen Erfassen von wenigstens zwei der folgenden Parameter: Zeitverlauf eines Wasserausflusses aus dem Hydranten (200) und durch die elektronische Prüfvorrichtung (100), Zeitverlauf eines Drucks des aus dem Hydranten (200) ausfließenden und durch die elektronische Prüfvorrichtung (100) durchfließenden Wassers, Öffnungsgrad einer Armatur (40) zur Steuerung des Wasserdurchflusses bis zum Erreichen eines vordefinierten Abbruchkriteriums; und
- ein Prognosemodul (32), welches ausgebildet ist, ein Prognostizieren von zumindest einem Zeitverlauf des durchfließenden Wassers ab dem definierten Abbrechen des messtechnischen Erfassens der wenigstens zwei Parameter, basierend auf den bis zum definierten Abbrechen wenigstens zwei messtechnisch erfassten Parametern durchzuführen.

14. Elektronische Prüfvorrichtung (100) nach Anspruch 13, wobei das Prognosemodul (32) wenigstens teilweise innerhalb der elektronischen Prüfvorrichtung (100) und/oder wenigstens teilweise außerhalb der elektronischen Prüfvorrichtung (100) angeordnet ist.

15. Elektronische Prüfvorrichtung (100) nach Anspruch 13 oder 14, weiterhin aufweisend ein zweites Anschlusselement (20) zum Anschließen einer Ausströmvorrichtung (300).
